(19) Europäisches Patentamt / European Patent Office / Office européen des brevets

(11) **EP 4 015 105 A1**

(12) **EUROPEAN PATENT APPLICATION**
published in accordance with Art. 153(4) EPC

(43) Date of publication:
**22.06.2022 Bulletin 2022/25**

(51) International Patent Classification (IPC):
**B22F 1/00** (2022.01)    **B22F 3/105** (2006.01)
**B22F 3/16** (2006.01)    **B22F 9/08** (2006.01)
**C22C 19/05** (2006.01)    **B33Y 80/00** (2015.01)

(21) Application number: **20864699.2**

(52) Cooperative Patent Classification (CPC):
**B22F 1/00; B22F 3/105; B22F 3/16; B22F 9/08;
B33Y 80/00; C22C 19/05**

(22) Date of filing: **17.08.2020**

(86) International application number:
**PCT/JP2020/031017**

(87) International publication number:
**WO 2021/054014 (25.03.2021 Gazette 2021/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.09.2019 JP 2019170114**

(71) Applicant: **Daido Steel Co., Ltd.
Nagoya-shi
Aichi 461-8581 (JP)**

(72) Inventors:
• **USUDA, Teruki**
  **Nagoya-shi, Aichi 457-8545 (JP)**
• **YAMADA, Shinnosuke**
  **Nagoya-shi, Aichi 457-8545 (JP)**
• **OSAKI, Mototsugu**
  **Nagoya-shi, Aichi 457-8545 (JP)**

(74) Representative: **Diehl & Partner
Patent- und Rechtsanwaltskanzlei mbB
Erika-Mann-Straße 9
80636 München (DE)**

(54) **POWDER MATERIAL, LAYERED SHAPED ARTICLE, AND PRODUCTION METHOD FOR POWDER MATERIAL**

(57) This powder material comprises an atomized powder of a Ni-based alloy containing inclusions, wherein the number of inclusion particles contained is not more than 100 per 10,000 particles of the atomized powder. This layered shaped article comprises a Ni-based alloy containing inclusions, wherein the number of inclusions contained in a cross-section is not more than $100/mm^2$. This powder material production method is for producing the powder material by a gas atomization method using an inert gas.

FIG.4

| SAMPLE STATE | SEM IMAGE | | NUMBER OF PARTICLES OF INCLUSIONS | MAXIMUM SIZE AND KIND OF INCLUSIONS |
|---|---|---|---|---|
| | (Nb, Ti)(C, N) | (Al, Ti)O₂ | | |
| POWDER MATERIAL A | — | 5 μm | 15 | 4.5 μm, $(Al, Ti)O_2$ |
| SHAPED ARTICLE A | — | 5 μm | 19 | 5.5 μm, $(Al, Ti)O_2$ |
| POWDER MATERIAL B | 5 μm | 5 μm | 55 | 1.0 μm, $(Al, Ti)O_2$<br>5.0 μm, $(Nb, Ti)(C, N)$ |
| SHAPED ARTICLE B | 5 μm | 5 μm | 60 | 2.5 μm, $(Al, Ti)O_2$<br>4.2 μm, $(Nb, Ti)(C, N)$ |

EP 4 015 105 A1

**Description**

TECHNICAL FIELD

The present invention relates to a powder material, an additive manufacturing article, and a method for producing the powder material, and more particularly relates to a powder material including an Ni-based alloy capable of being used as a raw material for additive manufacturing, an additive manufacturing article that is manufactured by use of the powder material, and a method for producing the powder material.

BACKGROUND ART

Recently, Additive Manufacturing (AM) has been developed conspicuously as a new technique for manufacturing a three-dimensional manufacturing article. As a kind of additive manufacturing, there is an additive manufacturing method using solidification by irradiation of a powder material with energy rays. Two kinds of methods, that is, a powder layer stacking and melting method and a powder layer deposition method are representative of the additive manufacturing method using a metal powder material.

Specific examples of the powder layer stacking and melting method include Selective Laser Melting (SLM) and Electron Beam Melting (EBM). In those methods, a powder material composed of metal is fed onto a base material serving as a base so as to form a powder bed, and a predetermined position of the powder bed is irradiated with energy rays such as a laser beam or an electron beam based on three-dimensional design data. Thus, the powder material in the region having received the irradiation is solidified through melting and resolidification and a shaped body is formed. Feeding the powder material to the powder bed and shaping by irradiation with the energy rays are repeated, and the shaped body is formed while sequentially stacking the shaped body in layers. Thus, a three-dimensional manufacturing article is obtained. On the other hand, specific examples of the powder layer deposition method include Laser Metal Deposition (LMD). In this method, a position where a three-dimensional manufacturing article should be formed is sprayed with metal powder by use of a nozzle and simultaneously irradiated with a laser beam. Thus, the three-dimensional manufacturing article with a desired shape is formed. Particularly the SLM is high in freedom in design or the like so that it can be suitably used for manufacturing a member with a precise and complicated shape. Thus, the SLM is expected for application to various fields.

The additive manufacturing method such as SLM can be carried out using powder materials having various compositions as raw materials. Among them, additive manufacturing using powder of an Ni-based alloy excellent in heat resistance or corrosion resistance as a raw material has begun to be used for manufacturing a member such as a rocket engine or a turbine blade operated under a harsh environment. The Ni-based alloy powder for additive manufacturing is, for example, disclosed in the following Patent Literature 1.

CITATION LIST

PATENT LITERATURE

Patent Literature 1: JP-A-2017-36485

SUMMARY OF INVENTION

TECHNICAL PROBLEM

In the case where inclusions such as metal oxides or metal carbonitrides are contained in a member constituted of an Ni-based alloy, fatigue cracks may start at the inclusions to affect fatigue strength. Also in the case where the member constituted of the Ni-based alloy is manufactured by the additive manufacturing method, it is desired to reduce the content of inclusions in an additive manufacturing article to be manufactured from the viewpoint of suppressing the reduction of fatigue strength. However, in the additive manufacturing method, metal powder is melted in a very short time and further solidified. Therefore, how inclusions should be produced and grow up in the additive manufacturing article to be manufactured has not been clear in detail. Accordingly, how to suppress the content of inclusions in the additive manufacturing article has not been established. So there is no suggestion in Patent Literature 1 about the inclusions contained in the additive manufacturing article.

A problem to be solved by the present invention is to provide a powder material which can suppress a content of inclusions to be small in an additive manufacturing article to be obtained in the case where additive manufacturing is performed using the powder material including an Ni-based alloy, an additive manufacturing article manufactured thus with a small content of inclusions, and a method for producing the powder material.

SOLUTION TO PROBLEM

In order to solve the above problems, the powder material according to the present invention is a powder material including an atomized powder of an Ni-based alloy containing inclusions, in which the number of particles of the contained inclusions is 100 particles or less per 10,000 particles of the atomized powder.

The Ni-based alloy preferably includes at least one additive element selected from Al, Ti and Nb, and the inclusions include at least one of oxide and carbonitride of the additive element. In this case, the number of particles in the inclusions containing the carbonitride of the additive element is preferably smaller than the number of particles in the inclusions containing the oxide of the additive element. Additionally, the number of particles in the inclusions containing the carbonitride of the additive element is preferably 10 particles or less per 10,000 particles of the atomized powder.

The inclusions preferably have a particle size of 30 $\mu$m or less. The particles of the atomized powder preferably have a circularity of 0.90 or more in average particle size.

The Ni-based alloy preferably includes, by mass%: $50\% \leq Ni \leq 60\%$, $15\% \leq Cr \leq 25\%$, $0\% < Mo \leq 5\%$, $0.1\% \leq Ti \leq 1.5\%$, $0.1\% \leq Al \leq 1.5\%$, $0\% < Nb \leq 6\%$, and $0.005\% \leq N \leq 0.05\%$, with the balance being Fe and unavoidable impurities, and further includes: $C \leq 0.08\%$, $O \leq 0.02\%$, and $S \leq 0.03\%$. In this case, the Ni-based alloy further preferably includes at least one kind selected from, by mass%: $0\% < Si \leq 0.5\%$, $0\% < Mn \leq 5\%$, $0.5\% \leq Hf \leq 3\%$, $0.5\% \leq Zr \leq 3\%$, $0\% < Co \leq 2\%$, and $0\% < Ta \leq 6\%$.

An additive manufacturing article according to the present invention includes an Ni-based alloy containing inclusions, in which the number of particles of the inclusions contained in a section of the additive manufacturing article is 100 particles/mm$^2$ or less.

The Ni-based alloy preferably includes at least one additive element selected from Al, Ti and Nb, and the inclusions include at least one of oxide and carbonitride of the additive element. In this case, the number of particles in the inclusions containing the carbonitride of the additive element is preferably smaller than the number of particles in the inclusions containing the oxide of the additive element. Additionally, the number of particles in the inclusions containing the carbonitride of the additive element is preferably 10 particles/mm$^2$ or less. The inclusions preferably have a particle size of 30 $\mu$m or less in the section of the additive manufacturing article.

The Ni-based alloy preferably includes, by mass%: $50\% \leq Ni \leq 60\%$, $15\% \leq Cr \leq 25\%$, $0\% < Mo \leq 5\%$, $0.1\% \leq Ti \leq 1.5\%$, $0.1\% \leq Al \leq 1.5\%$, $0\% < Nb \leq 6\%$, and $0.005\% \leq N \leq 0.05\%$, with the balance being Fe and unavoidable impurities, and further includes: $C \leq 0.08\%$, $O \leq 0.02\%$, and $S \leq 0.03\%$. In this case, the Ni-based alloy preferably further includes at least one kind selected from, by mass%: $0\% < Si \leq 0.5\%$, $0\% < Mn \leq 5\%$, $0.5\% \leq Hf \leq 3\%$, $0.5\% \leq Zr \leq 3\%$, $0\% < Co \leq 2\%$, and $0\% < Ta \leq 6\%$.

A method for producing a powder material according to the present invention is a method for a powder material by a gas atomization method using inert gas.

The inert gas is preferably a noble gas.

ADVANTAGEOUS EFFECTS OF INVENTION

The powder material according to the present invention includes atomized powder of an Ni-based alloy, which can be suitably used as a raw material for additive manufacturing such as SLM. In addition, the content of inclusions is suppressed to be 100 particles or less per 10,000 particles of the atomized powder. Thus, the content of inclusions can be suppressed to be small in an additive manufacturing article manufactured. As a result, in the additive manufacturing article, it is possible to suppress reduction in fatigue strength caused by the presence of the inclusions. Investigations of the present inventors have elucidated that in a step of additive manufacturing using an Ni-based alloy powder as a raw material, production or growth of inclusions does not occur substantially, and the amount of inclusions in an obtained additive manufacturing article substantially depends on the amount of inclusions contained in the raw material powder. Accordingly, in the case where the content of inclusions in the powder material serving as the raw material is suppressed to the aforementioned level, it is possible to suppress the content of inclusions to be satisfactorily small in the additive manufacturing article manufactured.

Here, in the case where the Ni-based alloy contains at least one additive element selected from Al, Ti and Nb, and the inclusions include at least one of oxide and carbonitride of the additive element, due to the additive element contained in the Ni-based alloy, the material strength can be enhanced in the additive manufacturing article to be manufactured. On the other hand, the additive element tends to form oxide or carbonitride. However, in the powder material according to the above invention, the content of inclusions is limited. Accordingly, the inclusions containing the oxide or carbonitride of the additive element are sufficiently prevented from contributing to reduction in fatigue strength or the like in the additive manufacturing article.

In this case, in the case where the number of particles in inclusions containing the carbonitride of the additive element is smaller than the number of particles in inclusions containing the oxide of the additive element, the total content of all inclusions can be reduced effectively. Some degree of inclusions containing metal oxide is inevitably produced in the case where the powder material including the Ni-based alloy is produced by an atomization method. However, the content of inclusions containing metal carbonitride can be comparatively easily reduced depending on the manufacturing conditions or component composition of the powder material.

In addition, in the case where the number of particles in the inclusions containing the carbonitride of the additive element is 10 particles or less per 10,000 particles of the atomized powder, the content of inclusions containing metal carbonitride in the powder material can be suppressed to be satisfactorily small, and hence the total content of all inclusions can be suppressed to be small.

In the case where the particle size of inclusions is 30 $\mu$m or less, the influence of the inclusions can be particularly effectively suppressed in the additive manufacturing article to be manufactured.

In addition, in the case where the particles of the atomized powder have a circularity of 0.90 or more in average particle size, high flowability and high filling performance can be obtained in the powder material due to the high circularity. Accordingly, the powder material can be used suitably as a raw material for additive manufacturing, and an additive manufacturing article having a dense structure can be manufactured with high quality.

In the case where the Ni-based alloy has the aforementioned component composition, the content of inclusions containing metal oxide or carbonitride can be easily suppressed to be small. In addition, due to high material strength or the like, the powder material can be used suitably as a raw material for additive manufacturing, and an additive manufacturing article can be manufactured with high quality.

The additive manufacturing article according to the invention includes an Ni-based alloy, and has a content of inclusions suppressed to be 100 particles/mm$^2$ or less in section. Accordingly, the additive manufacturing article is excellent in heat resistance and corrosion resistance and capable of suppressing reduction in fatigue strength caused by presence of the inclusions. As elucidated by the present inventors, production or growth of inclusions hardly occurs in a step of additive manufacturing in the case where the additive manufacturing article including the Ni-based alloy is manufactured. Accordingly, in the case where the additive manufacturing article is performed using, as a raw material, powder of the Ni-based alloy in which the content of inclusions is suppressed to be small as in the aforementioned powder material according to the present invention, the content of inclusions in the additive manufacturing article can be suppressed to be small, for example, to be 100 particles/mm$^2$ or less without any special treatment or the like in the step of additive manufacturing.

In the method for producing the powder material according to the invention, the powder material including the Ni-based alloy is produced by an atomization method using inert gas. Thus, the powder material excellent in cleanliness and circularity and capable of being used suitably as a raw material for additive manufacturing can be produced. Particularly the content of inclusions such as metal oxide or carbonitride can be effectively suppressed to enhance the cleanliness of the powder material.

In this case, in the case where noble gas is used as the inert gas, the content of inclusions can be suppressed to be particularly small. Particularly in comparison with a case where nitrogen gas is used as the inert gas, the content of inclusions containing metal carbonitride can be suppressed to be conspicuously small.

BRIEF DESCRIPTION OF DRAWINGS

[FIG. 1] (a) of FIG. 1 is an SEM image of a powder material A and (b) of FIG. 1 is an SEM image of a powder material B.

[FIG. 2] FIG. 2 is a graph showing particle size distributions of the powder materials A and B.

[FIG. 3] (a) of FIG. 3 is an optical microscope image of a shaped article A and (b) of FIG. 3 is an optical microscope image of a shaped article B.

[FIG. 4] FIG. 4 is a table showing SEM images, particle numbers, maximum sizes and kinds of inclusions in respective samples based on SEM-EDX observation results with a narrow view field.

[FIG. 5] FIG. 5 is a graph showing numbers of particles in inclusions per 1 mm$^2$ of sectional area in a bulk material and the shaped articles A and B based on SEM-EDX observation results with a wide view field.

[FIG. 6] FIG. 6 includes graphs showing a distribution of the number of particles of inclusions for each size based on the SEM-EDX observation results with the wide view field in (a) the shaped article A and (b) the shaped article B.

[FIG. 7] FIG. 7 is a graph showing contents of Al and Ti detected as inclusions in each sample by an extraction residue method.

[FIG. 8] FIG. 8 is a table showing an SEM image and a size of a largest particle of the inclusions detected in each sample by the extraction residue method.

DESCRIPTION OF EMBODIMENTS

Detailed description will be made below about a powder material, an additive manufacturing article, and a method for producing the powder material according to an embodiment of the present invention. The powder material according to the embodiment of the present invention can be used suitably as a raw material for additive manufacturing. In addition, the additive manufacturing article according to the embodiment of the present invention can be manufactured suitably using the powder material.

[Powder Material]

First, the powder material according to the embodiment of the present invention will be described. The powder material according to the embodiment including an aggregation of particles including an Ni-based alloy, and arranged as an atomized powder, that is, a powder material produced by an atomization method. The powder material according to the embodiment is intended to be used as a raw material for additive manufacturing or particularly for SLM.

The specific alloy composition of the Ni-based alloy constituting the powder material according to the present embodiment is not particularly limited as long as the content of inclusions can be suppressed not to exceed an upper limit which will be described next. An example of the alloy composition will be described in detail later. Preferably the Ni-based alloy contains at least one additive element (hereinafter also referred to as specified additive element) selected from Al, Ti and Nb. Those specified additive elements have an effect of enhancing the material strength in an additive manufacturing article to be obtained. More preferably, two or more kinds of the specified additive elements or all the three kinds are contained.

The powder material according to the present embodiment contains inclusions unavoidably. The inclusions are composed of particulates of metal compound such as metal oxide or metal carbonitride (including carbide and nitride; the same applies to the following). The inclusions are contained in the powder material so as to be included inside particles of the Ni-based alloy. However, in the powder material according to the present embodiment, the content of the inclusions is suppressed to be 100 particles or less per 10,000 particles of the atomized powder. More preferably the content of the inclusions may be suppressed to be 70 particles or less, or 50 particles or less.

In the case where the content of the inclusions is suppressed to be small in the powder material, the content of inclusions can be suppressed to be small in an additive manufacturing article manufactured using the powder material. Particularly in the case where additive manufacturing such as SLM is carried out using the powder material including the Ni-based alloy as will be shown in Examples later, production or growth of inclusions can be substantially prevented from occurring in a step of melting and resolidifying the powder material by irradiation with energy rays such as a laser beam. Accordingly, the inclusions contained in the powder material as a raw material are contained in the additive manufacturing article to be manufactured, substantially directly without changing their amount and form. That is, in the case where the content of inclusions in the powder material is suppressed to be small, the content of inclusions in the additive manufacturing article to be manufactured can be suppressed to be small. In the case where the content of inclusions in the powder material is suppressed to be 100 particles or less per 10,000 particles of the atomized powder, the content of inclusions in the additive manufacturing article to be manufactured can be, for example, suppressed to be 100 particles/mm$^2$ or less in section.

Each particle of inclusions contained in the powder material may have any size as long as the content of the inclusions is suppressed not to exceed the aforementioned upper limit. However, the inclusions typically have a micro-order particle size. In the case where the particle size (area equivalent circle diameter; the same applies to the following) is suppressed to be 30 $\mu$m or less, the influence of the inclusions can be particularly effectively suppressed in the additive manufacturing article to be manufactured using the powder material. More preferably the particle size of the inclusions is 10 $\mu$m or less.

Kinds or contents of details of the inclusions are not particularly limited as long as the total amount of the inclusions contained in the powder material is suppressed not to exceed the aforementioned upper limit. However, in the case where the Ni-based alloy contains the aforementioned specified additive element, the specified additive element tends to form oxide or carbonitride, and the oxide and/or carbonitride of the specified additive element tend to be contained as inclusions in the powder material. In that case, the number of particles in the inclusions containing the carbonitride of the specified additive element is preferably smaller than the number of particles in the inclusions containing the oxide of the specified additive element. Some amount of the oxide of the specified additive element can be contained in the powder material regardless of the component composition of the powder material, the manufacturing method thereof, and so on. On the other hand, the content of the carbonitride of the specified additive element can vary widely depending on the component composition of the powder material, the manufacturing method thereof, and so on. Therefore, in the case where the content of the carbonitride is suppressed to be small, it is possible to effectively reduce the total content of all inclusions to thereby improve the fatigue characteristic in the additive manufacturing article to be manufactured. Incidentally, as shown in Examples later, the inclusions containing the oxide of the specified additive element include substantially only the oxide of the specified additive element, and the inclusions containing the carbonitride of the specified additive element include substantially only the carbonitride of the specified additive element. Comparison in the number of particles among components of inclusions is preferably carried out on a statistically large number of particles of inclusions, for example, on inclusions contained per 10,000 particles of the atomized powder.

More preferably, the number of particles in the inclusions containing the carbonitride of the specified additive element is 50% or less of the number of particles in the inclusions containing the oxide of the specified additive element. Even more preferably, the former is 20% or less, or 10% or less. In addition, the number of particles in the inclusions containing the carbonitride is preferably 20 particles or less, more preferably 10 particles or less, even more preferably 5 particles or less per 10,000 particles of the atomized powder. In the case where the content of the inclusions containing the carbonitride of the specified additive element is suppressed to those levels or less, the total content of all inclusions including inclusions containing oxide can be also effectively reduced.

Of the specified additive elements, Al and Ti, particularly Al tends to form oxides. On the other hand, of the specified additive elements, Ti and Nb tend to form carbonitrides, particularly nitrides. The details of compounds constituting the oxide and the carbonitride of the specified additive element respectively are not particularly limited. However, in the oxides, the number of particles in inclusions containing Al oxide such as $Al_2O_3$ is preferably more than the number of particles in inclusions containing Ti oxide such as $TiO_2$. Further preferably, a ratio [Al oxide]/[Ti oxide] between the numbers of particles of the both is 2.0 or more. In the case where the ratio by numbers of particles is 2.0 or more, Al or Ti tends to contribute to precipitation and hardening of a $\gamma'$ phase rather than formation of inclusions.

The number and shapes of particles of inclusions contained in the powder material can be evaluated by a scanning electron microscopy (SEM). For example, the powder material may be embedded in resin, and cut to produce a sectional sample and observe inclusions in the sectional sample. The composition of the inclusions can be analyzed by energy-dispersion type X-ray analysis (SEM-EDX) using the SEM in the sectional sample.

Incidentally, the inclusions represent metal compound such as particulate oxide, carbonitride, etc. contained inside the powder material as described above. In evaluation of the number or the state of particles of the inclusions, a compound film such as an oxide film which is a thin film having a thickness of 10 nm order to cover the surface of each atomized particle constituting the powder material is not regarded as an inclusion. An inclusion made of a micron-order particulate is contained substantially directly in an additive manufacturing article manufactured in a step of additive manufacturing where the powder material is rapidly melted and solidified. On the other hand, a thin compound film in a surface of a particle is gasified when the powder material is melted. Thus, the thin compound film is hardly left in the additive manufacturing article and gives almost no influence to the characteristic of the additive manufacturing article.

The powder material according to the present embodiment is arranged as atomized powder. The atomized powder is characterized by easiness to enhance the circularity as well as easiness to enhance the cleanliness by use of a gas atomization method using inert gas, or the like, as will be described next. In the powder material according to the present embodiment, the circularity of particles is preferably 0.88 or more, more preferably 0.90 or more in average particle size (D50). In the case where additive manufacturing is performed using the powder material with high circularity, high flowability and high filling performance of the powder material can enhance relative density to obtain a dense structure in the additive manufacturing article to be manufactured.

The particle size of the powder material according to the present embodiment is not particularly limited. However, from the viewpoint of using the powder material suitably as a raw material for additive manufacturing, the particle size is preferably 150 $\mu$m or less in D90 diameter. In particular, in the case where the powder material is used for SLM among the additive manufacturing methods, the particle size (D90 diameter) is preferably 40 to 80 $\mu$m. In the case where the powder material is used for EBM, the particle size is preferably 80 to 100 $\mu$m. In the case where the powder material is used for LMD, the particle size is preferably 90 to 140 $\mu$m.

[Method for Producing Powder Material]

The powder material according to the embodiment is arranged as atomized powder, which can be produced by an atomization method performed using an alloy melt having a predetermined component composition as a raw material. Any method such as a gas atomization method, a disc atomization method or a water atomization method can be used as the atomization method. However, the gas atomization method using inert gas is preferred from the viewpoint of suitably producing a powder material having a micron-order particle size with high cleanliness and further high circularity, typically with a small content of inclusions.

Examples of the inert gas for use in the gas atomization method include nitrogen gas, and noble gas. Even by use of any inert gas, production of inclusions in the powder material, particularly production of inclusions containing metal oxide can be suppressed to be small. However, in the case where noble gas represented by argon gas is used, production of inclusions can be particularly effectively suppressed. Particularly in comparison with a case where nitrogen gas is used, production of inclusions containing metal carbonitride can be easily suppressed to be small. As a result, it is possible to suitably produce a high-cleanliness powder material in which the total content of all inclusions is suppressed to be small.

The powder material produced by the atomization method may be classified to select the particle size if necessary. In addition, chemical treatment may be applied to the powder material produced by the atomization method if necessary.

[Additive Manufacturing Article]

Next, an additive manufacturing article according to an embodiment of the present invention will be described. The additive manufacturing article is a shaped article formed into a predetermined shape by an additive manufacturing method such as SLM, EBM or LBM in which a powder material as a raw material is melted and resolidified by irradiation with energy rays. The additive manufacturing article according to the present embodiment can be suitably manufactured using, as a raw material, the powder material according to the embodiment which has been described in detail.

The additive manufacturing article according to the present embodiment includes an Ni-based alloy. A specific alloy composition of the Ni-based alloy is not particularly limited as long as the content of inclusions can be suppressed not to exceed an upper limit which will be described next. An example of the alloy composition will be described in detail later. Preferably the Ni-based alloy includes the specified additive element, that is, at least one selected from Al, Ti and Nb. In the case where those specified additive elements are contained, the material strength of the additive manufacturing article can be enhanced. More preferably, two or more kinds of the specified additive elements or all the three kinds are contained. The alloy composition of the additive manufacturing article has substantially the same alloy composition of the powder material used as a raw material.

The additive manufacturing article according to the present embodiment contains inclusions unavoidably. The inclusions are dispersed in a structure of the Ni-based alloy and contained in the additive manufacturing article. However, in the additive manufacturing article according to the present embodiment, the content (density) of the inclusions is suppressed to be 100 particles/mm$^2$ or less in a section of the additive manufacturing article. More preferably the content may be suppressed to be 70 particles/mm$^2$ or less, or 50 particles/mm$^2$ or less. In the additive manufacturing article, the section for evaluating the number of particles of inclusions may be set in any position and in any direction.

The additive manufacturing article including the Ni-based alloy has high corrosion resistance and high heat resistance. Therefore, the additive manufacturing article can be used suitably as a member such as a rocket engine or a turbine blade to be exposed to a harsh environment. However, in the case where inclusions including metal oxide or metal carbonitride are contained in the additive manufacturing article including the Ni-based alloy, fatigue cracks may start at the inclusions to reduce the fatigue characteristic of the additive manufacturing article. Particularly in a turbine blade or the like, low-cycle fatigue tends to be a problem. Therefore, in the case where the content of inclusions in the additive manufacturing article including the Ni-based alloy is suppressed to be small, reduction in fatigue strength can be suppressed. In the case where the number of particles of inclusions in a section of the additive manufacturing article is suppressed to be 100 particles/mm$^2$ or less, the reduction in fatigue strength of the additive manufacturing article can be effectively suppressed.

As long as the content of inclusions contained in the additive manufacturing article is suppressed not to exceed the aforementioned upper limit, each inclusion may have any size. However, each inclusion typically has a micron-order particle size. In the case where the particle size of the inclusions is suppressed to be 30 μm or less, the influence of the inclusions can be effectively suppressed in the additive manufacturing article. More preferably the particle size of the inclusions is 10 μm or less.

Kinds or contents of details of inclusions are not particularly limited as long as the total amount of the inclusions contained in the additive manufacturing article is suppressed not to exceed the aforementioned upper limit. However, in the case where the Ni-based alloy contains the aforementioned specified additive element, the specified additive element tends to form oxide or carbonitride, and the oxide and/or carbonitride of the specified additive element tend to be contained as inclusions in the additive manufacturing article. In that case, the number of particles of inclusions containing the carbonitride of the specified additive element is preferably smaller than the number of particles of inclusions containing the oxide of the specified additive element. As shown clearly in Examples later, in the case where additive manufacturing is performed using the Ni-based alloy powder as a raw material, production or growth of inclusions is substantially prevented from occurring in the step of the additive manufacturing, but inclusions contained in the powder material as the raw material are handed over to the additive manufacturing article substantially directly without changing their amount and form. As described above about the powder material according to the embodiment of the present invention, in the case where the content of inclusions containing carbonitride is suppressed to be small in the powder material, the total content of all inclusions can be effectively reduced. Incidentally, also in the additive manufacturing article, the inclusions containing the oxide of the specified additive element includes substantially only the oxide of the specified additive element, and the inclusions containing the carbonitride of the specified additive element include substantially only the carbonitride of the specified additive element. Comparison in the number of particles among components of inclusions in the additive manufacturing article is preferably carried out on a statistically large number of particles of inclusions, for example, on number of particles of inclusions contained per 1 mm$^2$ of a section of the additive manufacturing article.

More preferably, the number of particles in the inclusions containing the carbonitride of the specified additive element is 50% or less of the number of particles in the inclusions containing the oxide of the specified additive element. Even more preferably, the former is 20% or less, or 10% or less. In addition, the number of particles in the inclusions containing the carbonitride is preferably 50 particles/mm$^2$ or less, more preferably 20 particles/mm$^2$ or less, even more preferably 10 particles/mm$^2$ or less. In the case where the content of the inclusions containing the carbonitride of the specified additive element is suppressed to those levels or less, the total content of all inclusions can be also effectively reduced.

Incidentally, in the powder material used as a raw material for additive manufacturing, the number of particles of inclusions contained per 10,000 particles of the atomized powder and the number of particles of inclusions contained per 1 mm$^2$ area of a section of the additive manufacturing article can be associated with each other as substantially equivalent, as will be described below. A small one of powder particles in the powder material has a particle size of 5 μm or less, and a large one of them has a particle size of about 90 to 150 μm. An average particle size of the powder particles is about 10 to 20 μm. In the case where a total of 10,000 particles having such an average particle size are arrayed in 100 columns by 100 rows, the area of the region occupied by the aggregation of the particles is 1 mm × 1 mm = 1 mm$^2$. That is, 10,000 particles of the powder material and a sectional area of 1 mm$^2$ of the additive manufacturing article can be regarded as occupying areas substantially equal. Therefore, by use of the powder material in which the number of particles of inclusions per 10,000 particles of the atomized powder is suppressed to be 100 particles or less according to the embodiment of the present invention which has been described above, it is possible to suitably manufacture the additive manufacturing article in which the number of particles of inclusions in section is 100 particles/mm$^2$ or less.

The number or shapes of particles of inclusions contained in the additive manufacturing article can be evaluated by SEM. For example, the additive manufacturing article may be cut in a desired position and a desired direction to produce a sectional sample and observe inclusions in the sectional sample. The composition of the inclusions can be analyzed on the sectional sample by SEM-EDX. The evaluation using SEM-EDX may be performed in a desired observation view field, and may be performed continuously over a wide sectional area by automatic measurement.

Preferably the additive manufacturing article according to the present embodiment has a relative density of 98% or more. As the relative density of the additive manufacturing article is higher, the structure thereof becomes denser to increase the strength of the additive manufacturing article. Particularly in the present embodiment, where the content of inclusions is suppressed to be small to have high cleanliness in the additive manufacturing article as described above, the additive manufacturing article can also have high quality with excellent mechanical strength due to the high relative density. The relative density of the additive manufacturing article can be effectively enhanced, for example, by use of a material with high circularity as the powder material which is a raw material.

Further, from the viewpoint of enhancing the material strength of the additive manufacturing article, the hardness of the additive manufacturing article is preferably 250 HV or more. The hardness is more preferably 280 HV or more, even more preferably 300 HV or more.

The additive manufacturing article manufactured by the additive manufacturing method can be distinguished from a bulk material manufactured by casting or the like due to a microstructure formed in a section of the additive manufacturing article. For example, an additive manufacturing article manufactured by an SLM method is characterized by a molten bead, as a microstructure, formed like a wave along a laser scanning direction due to a molten pool formed during laser scanning, and a crystal structure growing epitaxially across the molten bead. On the other hand, a bulk material of an Ni-based alloy is characterized by a microcrystal aggregation comparatively uniform in particle size and high in isotropy.

In the additive manufacturing article including the Ni-based alloy, the content of inclusions is suppressed to be smaller than that of the bulk material including the same material. Particularly the content of inclusions containing metal carbonitride is suppressed to be small. The content of inclusions in the bulk material is generally about 250 to 400 particles/mm$^2$ in section.

[Alloy Compositions of Powder Material and Additive Manufacturing Article]

The powder material and the additive manufacturing article according to the embodiment of the present invention include an Ni-based alloy. For each of the powder material and the additive manufacturing article, the specific component composition of the Ni-based alloy is not particularly limited as long as the content of inclusions can be suppressed not to exceed the aforementioned upper limit. An example of the component composition of the Ni-based alloy capable of effectively suppressing the content of inclusions and excellent in properties such as material strength will be shown below as a component composition A.

In the step of additive manufacturing, the powder material is melted instantly by irradiation with energy rays, and then resolidified rapidly. In this step, no substantial change occurs in the composition of metal components. In addition, as demonstrated later in Examples, where additive manufacturing is performed using Ni-based alloy powder as a raw material, no substantial change occurs in the content and state of inclusions in the additive manufacturing step, and the contents of nonmetal elements such as O, N and C do not vary substantially, either. Thus, the component composition of the Ni-based alloy is substantially same between the powder material and the additive manufacturing article manufactured using the powder material. The component composition A which will be shown below is a component composition suitable for both the powder material and the additive manufacturing article.

The Ni-based alloy with the component composition A contains Ni, Cr, Mo, Ti, Al, Nb and N by the following predetermined contents respectively, with the balance being Fe and unavoidable impurities. In addition, the contents of C, O and S are restricted not to exceed the following predetermined upper limits.

Contents of component elements in the component composition A and reasons defining the contents will be described below. The unit of contents of the component elements are mass%. In addition, the contents of the component elements are defined based on the total of the powder material or the additive manufacturing article including inclusions.

$$(1) \qquad 50\% \leq \mathrm{Ni} \leq 60\%$$

Ni is a main component of the alloy. The Ni-based alloy shows high heat resistance and high corrosion resistance. The content of Ni is more preferably 55% or less.

$$(2) \qquad 15\% \leq \mathrm{Cr} \leq 25\%$$

Cr is an element contributing to enhancement of solid-solution strength of the alloy and improvement in oxidation resistance. From the viewpoint of obtaining those effects satisfactorily, the content of Cr is made 15% or more, more preferably 17% or more. On the other hand, in the case where Cr is added excessively, a $\delta$-phase is generated to reduce the high-temperature strength and toughness of the Ni-based alloy. Therefore, the content of Cr is made 25% or less, more preferably 21% or less.

$$(3) \qquad 0\% < \mathrm{Mo} \leq 5\%$$

Mo is an element contributing to solid-solution strength of the alloy and effectively enhancing the strength of the alloy. Even a small amount of Mo can exhibit a great addition effect. Therefore, the lower limit of the content of Mo is not particularly set, but the content of Mo is preferably 0.1% or more. On the other hand, an excessive content of Mo promotes generation of a $\mu$-phase or a $\sigma$-phase in the Ni-based alloy, causing embrittlement. Therefore, the content of Mo is made 5% or less, more preferably 3.5% or less.

$$(4) \qquad 0.1\% \leq \mathrm{Ti} \leq 1.5\%$$

Ti is an element forming a $\gamma$'-phase in the Ni-based alloy to increase the creep rupture strength and the oxidation resistance. From the viewpoint of obtaining those effects satisfactorily, the content of Ti is made 0.1% or more. On the other hand, in the case where Ti is contained excessively, high-temperature cracks tend to occur, causing cracking during the additive manufacturing. From the viewpoint of avoiding the cracking, the content of Ti is made 1.5% or less. In addition, in the case where Ti is contained together with N in the alloy, an inclusion such as TiN is produced. Further, in the case where Ti is contained together with O, an inclusion such as $TiO_2$ is formed. Also from the viewpoint of suppressing the production of those inclusions, the content of Ti is made 1.5% or less.

$$(5) \qquad 0.1\% \leq \mathrm{Al} \leq 1.5\%$$

Similarly to Ti, Al is also an element forming a $\gamma$'-phase to increase the creep rupture strength and the oxidation resistance. From the viewpoint of obtaining those effects satisfactorily, the content of Al is made 0.1% or more. On the other hand, in the case where Al is also contained excessively, high-temperature cracks tend to occur, causing cracking during the additive manufacturing. From the viewpoint of avoiding the cracking, the content of Al is made 1.5% or less. In addition, in the case where Al is contained together with O in the alloy, an inclusion such as $Al_2O_3$ is formed. Also from the viewpoint of suppressing the production of such an inclusion, the content of Al is made 1.5% or less.

$$(6) \qquad 0\% < \mathrm{Nb} \leq 6\%$$

Nb plays a role of forming carbonitride and forming a $\gamma'$-phase in the Ni-based alloy to improve the strength of the alloy. Even in the case where a small amount of Nb is added, high effect can be shown. Therefore, a lower limit for the content of Nb is not particularly set, but the content of Nb is preferably 4.0% or more. On the other hand, in the case where a large content of Nb is contained, a Laves phase is produced to reduce the strength contrarily. Therefore, the content of Nb is made 6% or less, more preferably 5.5% or less.

$$(7) \qquad 0.005\% \leq N \leq 0.05\%$$

N has an effect of contributing to enhancement of solid-solution strength to thereby improve the hardness of the additive manufacturing article. From the viewpoint of obtaining the effect satisfactorily, the content of N is made 0.005% or more. On the other hand, in the case where N is contained excessively, the ductility of the Ni-based alloy is lowered to promote cracking. In addition, the excessive content of N also promotes production of inclusions such as metal nitride. From the viewpoint of suppressing those phenomena, the content of N is made 0.05% or less.

The Ni-based alloy with the component composition A contains the aforementioned predetermined contents of Ni, Cr, Mo, Ti, Al, Nb and N, with the balance being Fe and unavoidable impurities. Here, the following elements and their upper limits are estimated as the unavoidable impurities.

$$(8) \qquad C \leq 0.08\%$$

C forms inclusions such as metal carbide in the Ni-based alloy. From the viewpoint of satisfactorily suppressing the production amount of the inclusions, the content of C is suppressed to be 0.08% or less.

$$(9) \qquad O \leq 0.02\%$$

O may form oxides with Fe, Ti, Al, etc., causing reduction in strength or toughness. From the viewpoint of suppressing formation of oxides, the content of O is made 0.02% or less.

$$(10) \qquad S \leq 0.03\%$$

S forms inclusions such as MnS. From the viewpoint of suppressing production of those inclusions, the content of S is made 0.03% or less.

The Ni-based alloy with the component composition A may further contain at least one element selected from the following elements optionally in addition to the aforementioned elements.

$$(11) \qquad 0\% < Si \leq 0.5\%$$

$$(12) \qquad 0\% < Mn \leq 5\%$$

Si and Mn are elements acting as deoxidants at the time of melting during production of the powder material, and providing oxidation resistance at high temperature. Even in the case where a small amount of Si and Mn is added, those effects can be exhibited greatly. Therefore, a lower limit is not particularly provided for the content. On the other hand, in the case where Si or Mn is contained excessively, the oxidation resistance at high temperature is reduced. Thus, the content of each of the elements is made 0.5% or less.

$$(13) \qquad 0.5\% \leq Hf \leq 3\%$$

Hf has an effect of improving the oxidation resistance of the Ni-based alloy. From the viewpoint of obtaining the effect satisfactorily, the content of Hf is made 0.5% or more. On the other hand, in the case where Hf is contained excessively, an embrittled phase is formed to reduce the strength and toughness. From the viewpoint of avoiding such a situation, the content of Hf is made 3% or less.

$$(14) \qquad 0.5\% \leq Zr \leq 3\%$$

Zr has an effect of being segregated on grain boundaries to enhance the creep strength in Ni-based alloy. From the viewpoint of obtaining the effect satisfactorily, the content of Zr is made 0.5% or more. On the other hand, in the case where Zr is contained excessively, the toughness is reduced. Therefore, the content of Zr is made 3% or less.

$$(15) \qquad 0\% < Co \leq 2\%$$

Co has an effect of increasing solubility of a $\gamma'$-phase to an Ni solid solution to thereby enhance the high-temperature ductility and the high-temperature strength. Even in the case where a small amount of Co is added, such an effect can be exhibited. Therefore, a lower limit is not particularly provided for the content of Co. On the other hand, in the case where Co is contained excessively, an embrittlement of the Ni-based alloy occurs. Thus, the content of Co is made 2% or less.

$$(16) \qquad 0\% < Ta \leq 6\%$$

Ta has an effect of strengthening a $\gamma'$-phase to improve the strength of the Ni-based alloy. Even in the case where a small amount of Ta is added, such an effect can be exhibited. Therefore, a lower limit is not particularly provided for the content of Ta. On the other hand, in the case where Ta is contained excessively, a Laves phase is produced to reduce the strength contrarily. Therefore, the content of Ta is made 6% or less.

EXAMPLES

The present invention will be described specifically using Examples below.

[1] Amount and State of Inclusions in Powder Material and Additive Manufacturing Article

Here, contents of inclusions and states of the inclusions, that is, component compositions and shapes were examined in powder materials including Ni-based alloys and additive manufacturing articles manufactured using the powder materials.

[Test Method]

(Production of Samples)

A powder material A and a powder material B were produced by a gas atomization method using, as raw materials, melts of Ni-based alloys having component compositions substantially the same as each other. Here, the powder material A was produced by argon gas injection in an inert gas induction furnace (IGIF). On the other hand, the powder material B was produced by nitrogen (N$_2$) gas injection in a high frequency induction furnace (HFIF). Each of the powder materials was classified so that the powder particle size was set at -45 $\mu$m in nominal particle size.

Additive manufacturing articles were produced as shaped articles A and B by an SLM method using the above produced powder materials A and B respectively. A block 12 mm square and 20 mm high was produced as each of the additive manufacturing articles. A pilelike support was formed integrally under the block.

(Identification of Samples)

On the produced powder materials A and B and the shaped articles A and B manufactured using the powder materials A and B, component compositions were evaluated respectively by fluorescent X-ray analysis and gas analysis.

Further, on each of the powder materials A and B, powder appearance was evaluated by SEM observation. In addition, a particle size distribution and circularity in average particle size (D50) were evaluated by a wet particle image measuring method. Further, true density of each powder material was evaluated by a liquid-phase substitutional method.

Relative densities of the shaped articles A and B were estimated based on measuring results of densities measured by an Archimedes method and the true densities of the powder materials evaluated above. In addition, hardness of each shaped article A, B was measured by a Vickers hardness test according to JIS Z2244: 2009. Further, a microstructure in a section of each shaped article was evaluated by observation with an optical microscope.

(Evaluation of Amount and State of Inclusions)

On each of the powder materials A and B and the shaped articles A and B, the amount and state of inclusions were evaluated by SEM-EDX.

For each powder material, particles were embedded in resin, and cut to produce a sectional sample. SEM-EDX observation using the sectional sample produced thus was performed on 10,000 particles of the powder material. On the other hand, for each shaped article, a central part in a height direction was cut vertically in the height direction to produce a sectional sample. SEM-EDX observation was performed on the obtained sectional sample in a view field with an optionally selected observation area of $0.15 \text{ mm}^2$. Inclusions contained in the powder materials and the shaped articles were evaluated as to number, component composition, size, shape, etc. by SEM-EDX observation on their sectional samples. The particle size of each inclusion was evaluated as an area circle equivalent diameter.

Further, for the shaped articles A and B, SEM-EDX observation based on fully automatic measurement was performed on the aforementioned sectional samples. Thus, the number of inclusions, the component composition, the size, etc. were evaluated in an observation area of $25 \text{ mm}^2$ wider than above-described observation area. The observation in a wider view field was also performed on a section of a bulk material as a reference sample. The bulk material was produced by casting with a vacuum induction furnace (VIF) using, as a raw material, the same alloy melt as those of the powder materials A and B.

Finally, each of the powder materials A and B and the shaped articles A and B was analyzed by an extraction residue method as to amount, composition and size of inclusions. That is, each sample was collected by 2.0 g, and inclusions were eluted using a bromine methanol solution. Metal components were dissolved in this solution. However, the inclusions were not dissolved but left behind as residue. The obtained eluted solution was filtered by a $0.2 \text{ } \mu\text{m}$ mesh filter. The inclusions caught by the filter were observed by SEM-EDX, and the amount, composition and size of the inclusions were evaluated.

[Test Results]

(Identification of Samples)

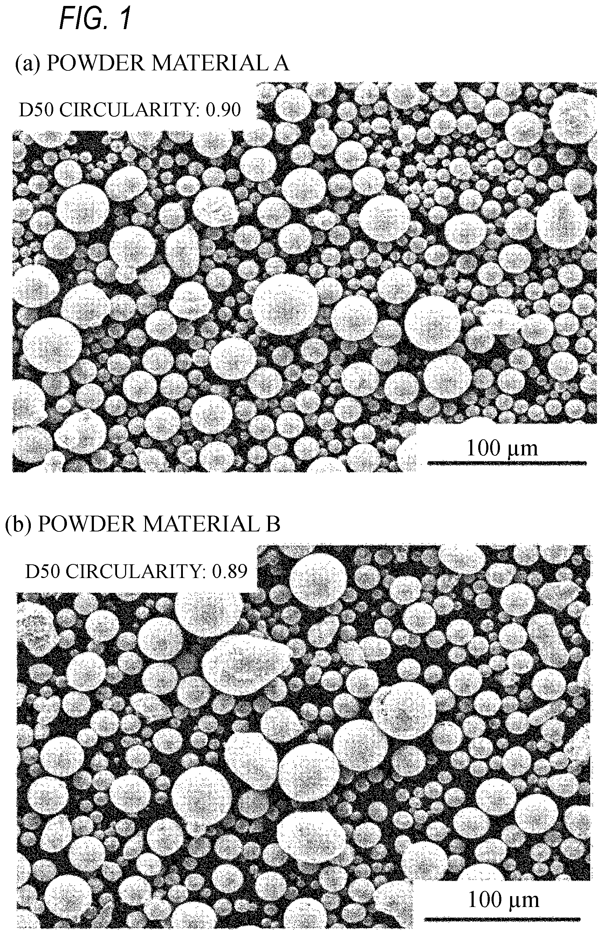

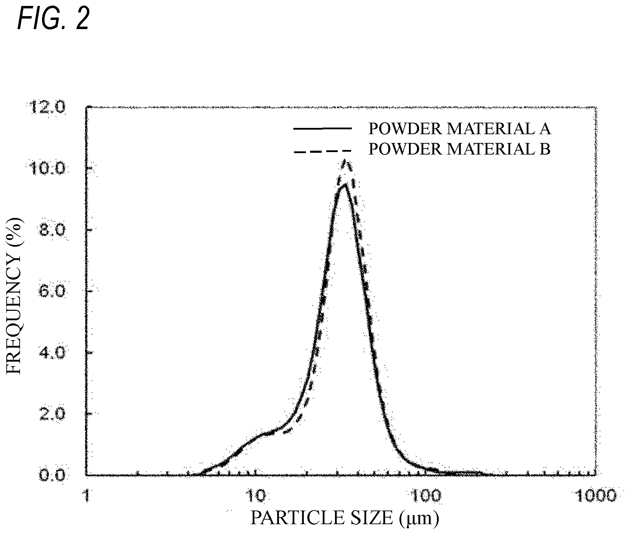

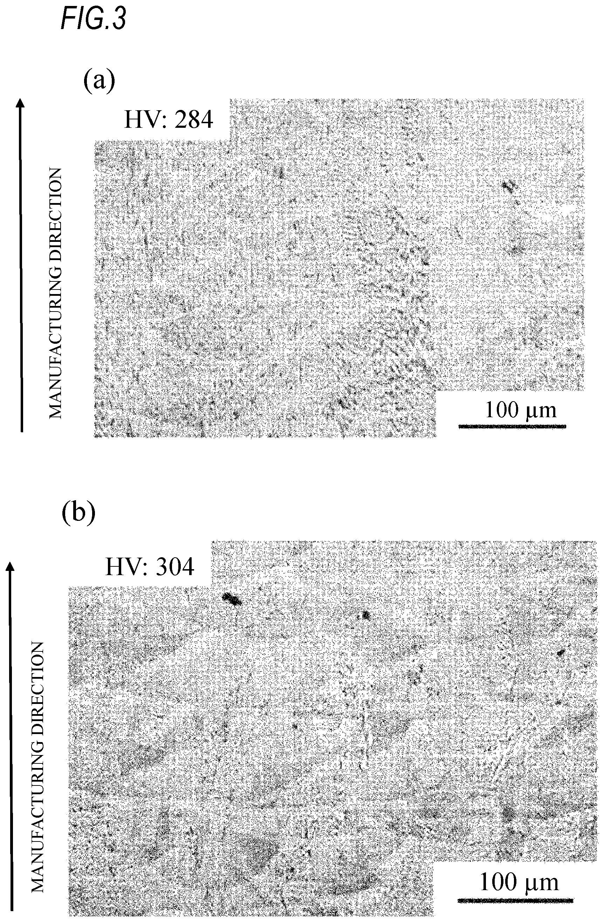

Analysis results of the component compositions of the powder materials A and B and the shaped articles A and B obtained by the fluorescent X-ray analysis and the gas analysis are shown in the following Table 1. In addition, SEM observation images of the powder materials A and B are shown in FIG. 1, and their particle size distribution measuring results are shown in FIG. 2. Evaluation results as to the states of the powder materials such as particle sizes are listed in Table 2. Further, optical microscope images of the shaped articles A and B are shown in FIG. 3, and evaluation results as to relative densities and physical properties are listed in Table 3.

[Table 1]

| | contained component (mass%) | | | | | | | | | |
|---|---|---|---|---|---|---|---|---|---|---|
| | C | Ni | Cr | Mo | Ti | Al | Nb+Ta | O | N | Fe |
| powder material A | 0.02 | 52.2 | 19.0 | 3.0 | 0.9 | 0.4 | 5.1 | 0.01 | 0.01 | balance |
| shaped article A | 0.02 | 52.5 | 18.9 | 3.0 | 0.9 | 0.4 | 5.1 | 0.02 | 0.02 | balance |
| powder material B | 0.02 | 52.2 | 19.0 | 3.0 | 1.1 | 0.6 | 5.1 | 0.02 | 0.05 | balance |
| shaped article B | 0.01 | 51.8 | 18.7 | 3.0 | 1.1 | 0.6 | 5.1 | 0.02 | 0.04 | balance |

[Table 2]

| | particle size [$\mu$m] | | | powder true density [g/cm$^3$] | circularity (D50) |
|---|---|---|---|---|---|
| | D10 | D50 | D90 | | |
| powder material A | 13.2 | 29.6 | 47.0 | 8.19 | 0.90 |
| powder material B | 13.7 | 30.8 | 47.4 | 8.22 | 0.89 |

[Table 3]

|  | density [g/cm3] | relative density [%] | hardness [HV] |
|---|---|---|---|
| shaped article A | 8.18 | 99.9 | 284 |
| shaped article B | 8.17 | 99.4 | 304 |

In Table 1, there is substantially no difference between the powder material A and the powder material B as to contents of respective component elements excluding N, Al and Ti. However, each of the contents of N, Al and Ti is larger in the powder material B than in the powder material A. Particularly, the content of N in the powder material B is five times as large as in the powder material A. This can be read as a comparatively large amount of N was introduced into the powder material B since nitrogen gas was used for producing the powder material B while the amount of N introduced into the powder material A was suppressed to be smaller since argon gas was used for producing the powder material A. Ti is an element tending to form nitride. It can be considered that more Ti was also contained in the form of nitride in the powder material B containing more N.

Further in Table 1, there is no substantial change in contents of component elements between each powder material A, B and its shaped article A, B obtained through an additive manufacturing step. That is, there is no change in component composition of each material including C, N and O in spite of melting and resolidification of the powder material in the additive manufacturing step. This result matches analysis results of inclusions using SEM-EDX and the like, which will be described next.

In FIG. 1, some of particles observed in each of the powder materials A and B have shapes deviating from circular ones or some are attached with satellite powder (small-diameter particles), but a large number of the particles close to circles are observed excluding them. As shown in Table 2, high circularity of about 0.90 is obtained from each of the powder materials A and B. Further, in FIG. 2, the particle size distributions of the powder materials A and B overlap each other well, and the particle size values shown in Table 2 are substantially the same between the two. The true densities of the two also are substantially the same between the powder materials A and B. In this manner, it is understood that the powder material A and the powder material B have substantially the same shape, size, and density, not depending on the conditions for manufacturing.

In FIG. 3, a molten bead is produced like a wave along a laser scanning direction (laterally in FIG. 3) in each of the shaped articles A and B. In addition, a microstructure based on a crystal growing epitaxially to run like a stripe in an additive manufacturing direction (vertically in FIG. 3) across the molten bead can be observed. In Table 3, the density and the relative density in the shaped article A are substantially the same as those in the shaped article B, but the hardness in the shaped article B is higher by about 30 HV The difference in hardness can be associated with precipitation strengthening caused by precipitation of inclusions.

(Amount and State of Inclusions)

(1) Relationship between Method for Producing Powder Material and Production of Inclusions

First, examination will be made about what difference in kind or amount of inclusions is provided by a difference in how to produce a powder material.

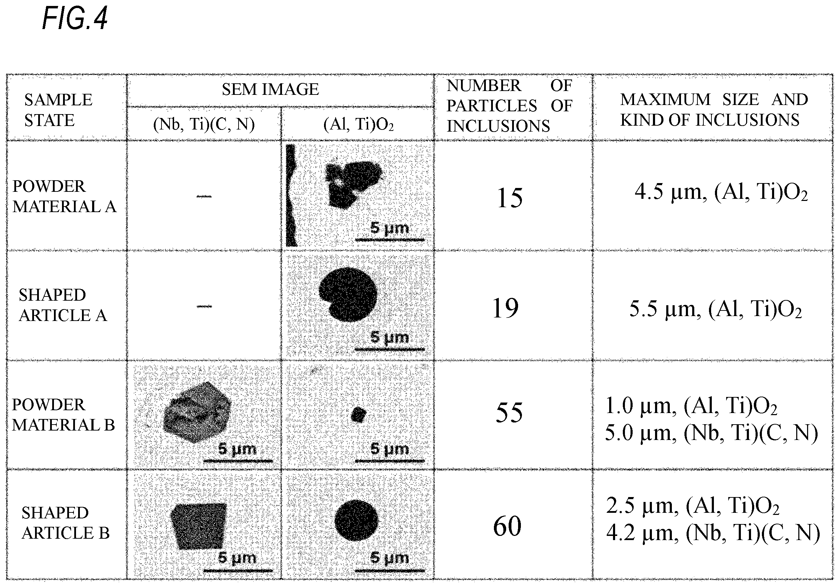

FIG. 4 shows shapes, particle numbers, maximum sizes and component compositions of inclusions obtained by SEM-EDX observed on the powder materials A and B and the shaped articles A and B in a desired view field. Incidentally, the observation results used for the shaped articles A and B were obtained by observation in a narrow view field with an observation area of 0.15 mm$^2$. In FIG. 4, SEM images show inclusions selected optionally. In addition, the number of particles of inclusions designates a value converted into the number of particles contained per 10,000 particles of material powder for each powder material, and the number of particles per 1 mm$^2$ of a sectional area for each shaped article. In and after FIG. 4, $(Al, Ti)O_2$ designates oxides of Al and Ti, and $(Nb, Ti)(C, N)$ designates carbonitrides of Nb and Ti.

In FIG. 4, in the powder material A and the shaped article A, only the oxides $(Al, Ti)O_2$ are observed as inclusions, but the carbonitrides $(Nb, Ti)(C, N)$ is not observed. On the other hand, in the powder material B and the shaped article B, both the oxides $(Al, Ti)O_2$ and the carbonitrides $(Nb, Ti)(C, N)$ are observed as inclusions.

From the aforementioned fact, it can be considered that N atoms are contained in a state of metal carbonitrides in the powder material B in which the content of N is comparatively large as shown in the above component composition analysis due to nitrogen gas used for producing the powder material, and the shaped article B which is manufactured using the powder material B. On the other hand, it can be read that an amount of metal carbonitrides which can be detected by SEM-EDX are not contained as inclusions because of the correspondingly small content of N in the powder material A in which the content of N in the powder material is suppressed to be small due to argon gas used for producing the powder material, and the shaped article A which is manufactured using the powder material A.

In addition, the numbers of particles of inclusions in the powder material A and the shaped article A are suppressed to be conspicuously smaller than in the powder material B and the shaped article B respectively. It can be considered that the effect that the content of carbonitrides in the powder material A and the shaped article A is suppressed conspicuously has a large contribution to the reduction in number of particles of inclusions. Further, the maximum particle sizes of all the inclusions in the powder material A and the shaped article A are substantially equal to those in the powder material B and the shaped article B respectively. However, when attention is paid to only the oxides, the maximum particle sizes of the oxides in the powder material B and the shaped article B are smaller. It can be considered that this is associated with the fact that Ti which is an element producing oxides contributes to formation of carbonitrides in the powder material B and the shaped article B.

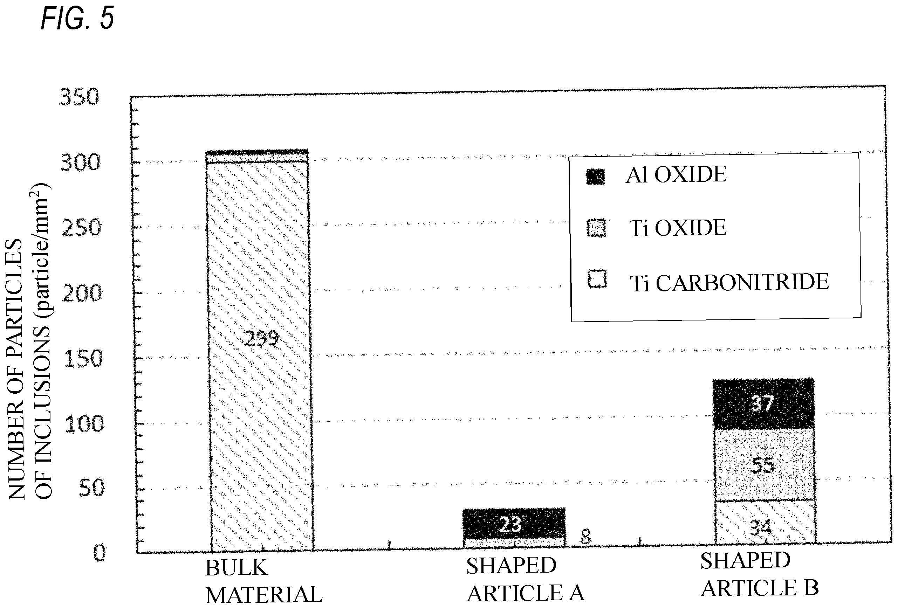

Thus, from the results of SEM-EDX observation in an optionally selected narrow view field, it is proved that production of carbonitrides can be suppressed to also suppress the number of particles of inclusions to be small in the case where a powder material is produced by an atomization method using argon gas and used for additive manufacturing, in comparison with a case using nitrogen gas. Further, such a tendency can be statistically confirmed from the results of continuous observation performed on a section of each shaped article by fully automatic SEM-EDX in a wide view field with an observation area of 25 mm$^2$. FIG. 5 shows the number of particles of inclusions per 1 mm$^2$ for each kind of inclusions, which was obtained by continuous observation on a section in each of the shaped articles A and B and the bulk material.

In FIG. 5, not only oxides, that is, Al oxide and Ti oxide but also Ti carbonitride are observed as inclusions in the shaped article B while Ti carbonitride is not produced in the shaped article A but only the two kinds of oxides are observed therein. Further, in the shaped article A, the content of oxides is also smaller. Consequently the total number of all inclusions in the shaped article A is smaller than in the shaped article B. Those results match the results of FIG. 4 obtained by the SEM-EDX observation in the optional narrow view field described above.

In addition, in the shaped article B, the content of oxides is larger than the content of carbonitrides. In comparison between the content of Al oxide and the content of Ti oxide, the content of Ti oxide is larger in the shaped article B while the content of Al oxide is larger in the shaped article A.

The content of inclusions in the shaped article B is larger than in the shaped article A. However, in comparison between each shaped article A, B and the bulk material, it is understood that the content of inclusions is reduced conspicuously in each shaped article A, B. Particularly in the bulk material, a large amount of inclusions composed of carbonitrides are contained. In the shaped article B, the content of carbonitride is reduced to about 10%. Further, in the shaped article A, carbonitrides are not produced as described above. From those facts, it is proved that the content of inclusions, particularly the content of inclusions composed of carbonitrides can be reduced conspicuously in the additive manufacturing article using the powder material produced by the atomization method whether atomization gas used for producing the powder is argon gas or nitrogen gas, as compared with that in the bulk material. Further, in the case where argon gas is used as the atomization gas, the content of inclusions can be more reduced.

Here, Table 4 shows component compositions of inclusions obtained by the aforementioned continuous observation on sections of the shaped articles A and B. In Table 4, the component composition of the inclusions is expressed by element content ratio (unit: mol%) for each kind of the inclusions.

[Table 4]

| component element | shaped article A | shaped article B | |
|---|---|---|---|
| | $(Al,Ti)O_2$ | $(Al,Ti)O_2$ | $(Nb,Ti)(C,N)$ |
| Al | 19.7 | 20.5 | 0.0 |
| Ti | 8.4 | 10.5 | 32.9 |
| Nb | 3.0 | 2.4 | 5.9 |
| C | 4.2 | 2.1 | 5.0 |
| O | 64.7 | 62.7 | 0.0 |
| N | 0.0 | 1.8 | 56.2 |

In Table 4, oxides include substantially only Al, Ti and O and includes only a very small amount of Nb and C. N is not contained. Carbonitrides include only Ti, Nb, C and N. Al and O are not contained. From those facts, it is confirmed that oxides and carbonitrides contained as inclusions in each shaped article have quite different compositions and are formed as independent phases. The shaped article A and the shaped article B have substantially the same composition of oxides.

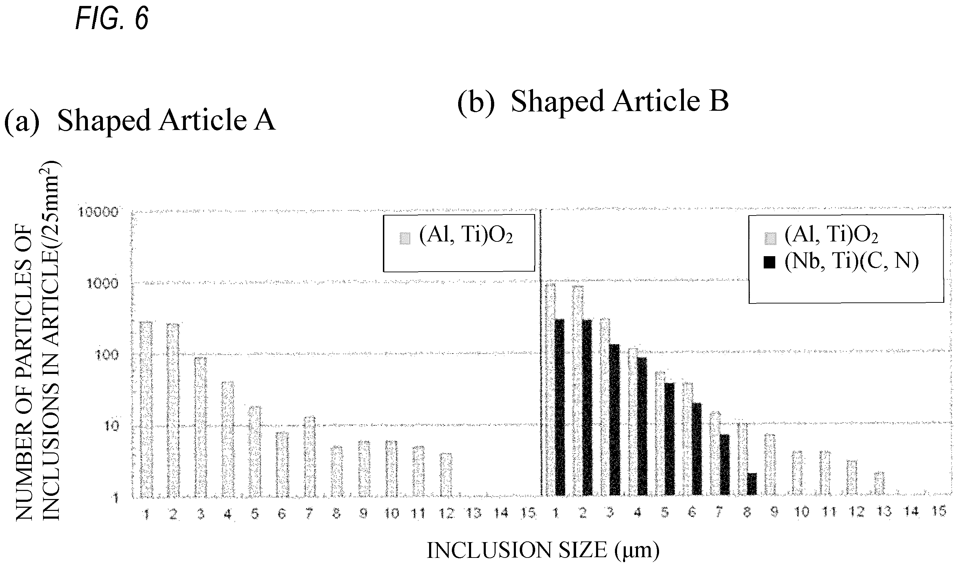

Further, FIG. 6 shows the number of particles (per 25 mm$^2$) of inclusions observed in each shaped article A, B for each size. In each of the shaped articles A and B and for each of oxides and carbonitrides, a large number of fine particles of inclusions with a particle size of 10 $\mu$m or less are produced. In comparison between an oxide distribution and a carbonitride distribution in the shaped article B, carbonitrides are distributed in a smaller size region, and an inclusion having a maximum particle size is oxide. Incidentally, in each shaped article A, B, the maximum particle size of inclusions is larger than in FIG. 4. This is because a larger number of particles of inclusions could be observed due to the wider observation view field.

As described above, results matching the results of the observation in the narrow observation view field could be obtained with statistically higher reliability by the SEM-EDX observation in the wide observation view field. That is, it was confirmed that production of inclusions including carbonitrides can be suppressed conspicuously and further the total number of particles of all inclusions can be suppressed to be small in the shaped article A using, as a raw material, the powder material produced by the atomization method using argon gas, in comparison with that in the shaped article B using, as a raw material, the powder material produced by the atomization method using nitrogen gas. In addition, it was confirmed that the content of inclusions can be reduced conspicuously by use of additive manufacturing using the atomized powder even if either atomization gas is used, as compared with that in the bulk material. The component composition and the size distribution of inclusions also became clear.

(2) Change of Inclusions through Additive Manufacturing Step

See again the results of FIG. 4 where SEM-EDX observation was performed on both the powder materials and the shaped articles, in order to examine whether there occurs a change in kind or amount of inclusions through the additive manufacturing step.

In FIG. 4, kinds of inclusions and their maximum particle sizes are compared among the powder materials and the shaped articles produced using the powder materials. The kinds of observed inclusions (oxide or carbonitride) in each of the powder materials A and B are not changed after the powder material is formed into the shaped article A, B through the additive manufacturing step. The maximum particle size of the inclusions is substantially the same between the powder material A and the shaped article A. As for the powder material B and the shaped article B, the particle size of the oxide increases in the shaped article B, but there is substantially no change in the carbonitride between the two. From those facts, it can be said that no new kind of inclusions is produced from the state of the powder material through the additive manufacturing step, and further no particle growth occurs at least in the carbonitride.

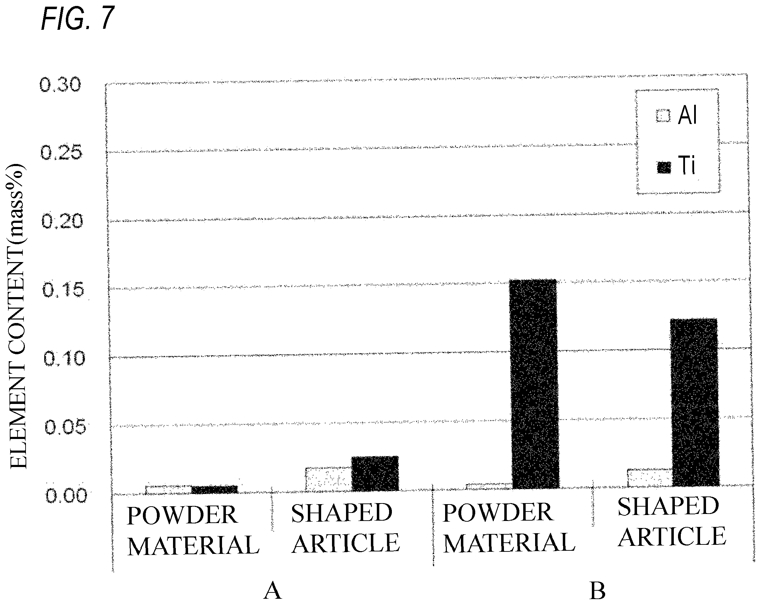

Further, results of observation of inclusions based on an extraction residue method will be examined in order to quantitatively compare the content of inclusions between each powder material and its shaped article. FIG. 7 shows results of analysis about the component composition of extracted residue. FIG. 7 shows contents of Al and Ti detected as constituents of inclusions in each sample. The unit of contents is mass% based on the total mass of the powder material or the shaped article. Each content can be compared directly between the powder material and the shaped article.

In FIG. 7, small contents of Al-based and Ti-based inclusions are detected in the powder material A and the shaped article A. This can be associated with Al and Ti oxides. On the other hand, a small content of Al-based inclusions and a large content of Ti-based inclusions are detected in the powder material B and the shaped article B. This can be associated with a state in which carbonitride containing Ti is produced in addition to Al and Ti oxides. In this manner, the results of analysis in the extracted residue correspond to the aforementioned results of observation in the SEM-EDX well.

Further, in FIG. 7, there is no large change in the detected contents of Al and Ti between the powder material A and the article shaped A and between the powder material B and the article shaped B. From this fact, it is understood that there is substantially no change in the amount and kind of inclusions through the additive manufacturing step where each article is produced from each powder material.

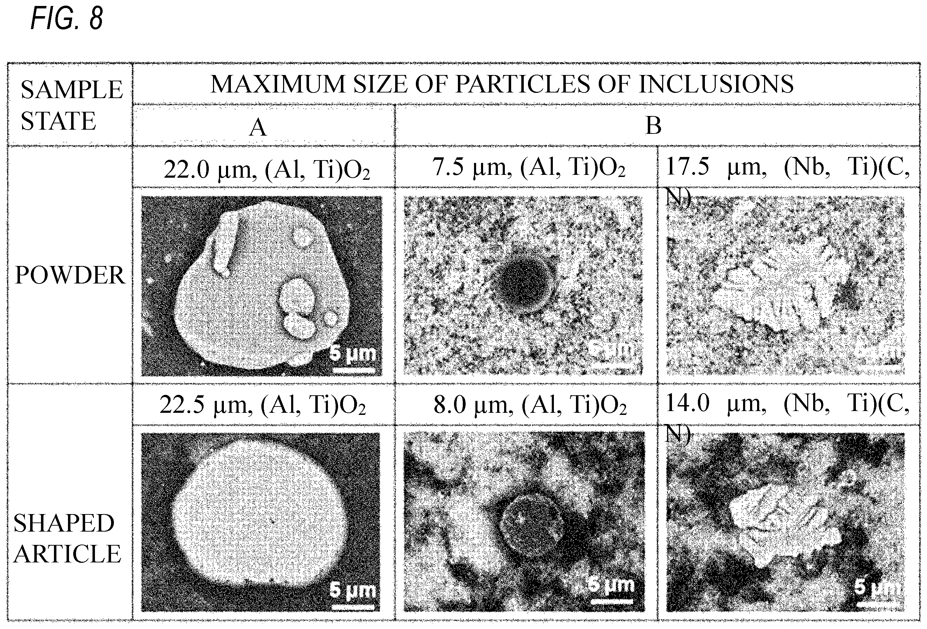

FIG. 8 shows an SEM image of a largest particle of inclusions in extracted residue of each sample. When the results of observation are compared between the powder material A and the shaped article A, there is substantially no change in maximum particle size and particle shape of oxide. Similarly, when the results of observation are compared between the powder material B and the shaped article B, there is substantially no change in maximum particle size and particle shape of each of oxide and carbonitride. From this fact, it is understood that particles of inclusions do not grow in each sample and in each of oxide and carbonitride through the additive manufacturing step where each shaped article is manufactured from each powder material. Incidentally, the oxide has a particle shape close to a sphere while the carbonitride has a particle shape like a dendrite shape.

From the results of the SEM-EDX observation and the experiments based on the extraction residue method, it was proved that substantially no production and no growth occur in inclusions through an additive manufacturing step where a shaped article is produced from a powder material. That is, inclusions are produced in a powder material during manufacturing of the powder material in an atomization method depending on the manufacturing conditions such as the kind of atomization gas or a component composition which will be shown next. However, substantially no production of new inclusions, no growth of particles, or no change such as modification occurs through an additive manufacturing step where a shaped article is produced from the powder material. In the additive manufacturing step, the powder material is melted rapidly, and then solidified rapidly. However, it can be considered that those processes proceed at high speed so that the inclusions which have been present in the powder material keeps their states without dissolving or melting into molten metal or without growing.

[2] Component Composition of Ni-based Alloy and Inclusions

Next, the relationship between the component composition of an Ni-based alloy constituting each powder material and its additive manufacturing article and the content of inclusions was examined.

[Test Method]

(Production of Samples)

Each powder material was produced with a change in its component composition, and an additive manufacturing article was manufactured using the powder material. The powder material was produced by IGIF and injection of argon gas in the same manner as the sample A in the aforementioned test [1]. Classification was also performed in the same manner. The additive manufacturing article was produced from the powder material by the SLM method in the same manner as in the test [1].

(Identification of Samples)

The component composition of each of the powder materials produced thus and the shaped articles produced using the powder materials was evaluated by fluorescent X-ray analysis and gas analysis.

(Evaluation of Amount and Kind of Inclusions)

For each of the powder materials and the shaped articles, the number of particles of inclusions was evaluated for each kind of inclusions by SEM-EDX observation performed in the same manner as the SEM-EDX observation in the observation area of 0.15 mm$^2$ in the above test [1].

[Test Results]

The following Table 5 shows component compositions of powder and its shaped article for each Sample 1 to 16. Fe is a composition constituting the alloy as the balance of the other components shown in Table 5, where the content of Fe calculated from the contents of the other components is indicated in parentheses. Table 5 further shows the number of particles of inclusions detected in each sample. The number of particles of inclusions are shown for each of Al oxide, Ti oxide and Ti carbonitride. In addition, the ratio in number of particles between Al oxide and Ti oxide (Al oxide/Ti oxide) is also shown. The number of particles of inclusions is shown as the number of particles per 10,000 powder particles for each powder material, and as the number of particles per 1 mm$^2$ of a section for each shaped article.

[Table 5]

| sample No. | sample state | component composition [mass%] | | | | | | | | | | | | | | | | | number of particles of inclusions | | | | |
|---|---|---|---|---|---|---|---|---|---|---|---|---|---|---|---|---|---|---|---|---|---|---|---|
| | | C | Ni | Cr | Mo | Ti | Al | Nb | O | N | Si | Mn | S | Hf+Zr | Co | Ta | Fe | (Fe) | total | Al oxide | Ti oxide | Ti carbonitride | Al oxide /Ti oxide |
| 1 | powder | 0.024 | 52.24 | 19.01 | 2.96 | 0.92 | 0.38 | 5.09 | 0.011 | 0.011 | 0.3 | 0.25 | 0.01 | | | | balance | 18.794 | 70 | 45 | 22 | 3 | 2.05 |
| | shaped article | 0.021 | 52.48 | 18.93 | 3.0 | 0.94 | 0.38 | 5.11 | 0.017 | 0.01 | 0.3 | 0.25 | 0.01 | | | | balance | 18.552 | 73 | 46 | 23 | 4 | 2.00 |
| 2 | powder | 0.04 | 53.5 | 20.5 | 2.5 | 0.5 | 1.0 | 4.5 | 0.005 | 0.03 | 0.25 | 0.3 | 0.02 | | | | balance | 16.855 | 75 | 50 | 25 | 0 | 2.00 |
| | shaped article | 0.041 | 53.5 | 19.9 | 2.6 | 0.5 | 1.0 | 4.5 | 0.01 | 0.03 | 0.25 | 0.3 | 0.02 | | | | balance | 17.349 | 77 | 50 | 20 | 7 | 2.50 |
| 3 | powder | 0.05 | 50.5 | 18.0 | 2.7 | 1.0 | 1.25 | 5.3 | 0.015 | 0.04 | 0.1 | 0.2 | 0.03 | | | | balance | 20.815 | 80 | 47 | 23 | 10 | 2.04 |
| | shaped article | 0.045 | 50.5 | 17.5 | 2.8 | 1.0 | 1.25 | 5.3 | 0.018 | 0.04 | 0.1 | 0.2 | 0.03 | | | | balance | 21.217 | 80 | 50 | 25 | 5 | 2.00 |
| 4 | powder | 0.024 | 52.24 | 19.01 | 2.96 | 0.92 | 0.38 | 5.09 | 0.011 | 0.01 | 0.3 | 0.25 | 0.01 | 1 | | | balance | 17.794 | 70 | 45 | 20 | 5 | 2.25 |
| | shaped article | 0.021 | 52.48 | 18.93 | 3.0 | 0.94 | 0.38 | 5.11 | 0.017 | 0.01 | 0.3 | 0.25 | 0.01 | 1 | | | balance | 17.552 | 75 | 45 | 22 | 8 | 2.05 |
| 5 | powder | 0.04 | 53.5 | 20.5 | 2.5 | 0.5 | 1.0 | 4.5 | 0.005 | 0.03 | 0.25 | 0.3 | 0.02 | | 1.5 | | balance | 15.355 | 75 | 45 | 22 | 8 | 2.05 |
| | shaped article | 0.041 | 53.5 | 19.9 | 2.6 | 0.5 | 1.0 | 4.5 | 0.01 | 0.03 | 0.25 | 0.3 | 0.02 | | 1.5 | | balance | 15.849 | 78 | 50 | 25 | 3 | 2.00 |
| 6 | powder | 0.05 | 50.5 | 18.0 | 2.7 | 1.0 | 1.25 | 5.3 | 0.015 | 0.04 | 0.1 | 0.2 | 0.03 | | | 3 | balance | 17.815 | 80 | 47 | 23 | 10 | 2.04 |
| | shaped article | 0.045 | 50.5 | 17.5 | 2.8 | 1.0 | 1.25 | 5.3 | 0.018 | 0.04 | 0.1 | 0.2 | 0.03 | | | 3 | balance | 18.217 | 82 | 49 | 23 | 10 | 2.13 |
| 7 | powder | 0.05 | 50.5 | 18.0 | 2.7 | 1.0 | 1.25 | 5.3 | 0.015 | 0.04 | 0.1 | 0.2 | 0.03 | 1 | 1.5 | 3 | balance | 15.315 | 80 | 50 | 24 | 6 | 2.08 |
| | shaped article | 0.045 | 50.5 | 17.5 | 2.8 | 1.0 | 1.25 | 5.3 | 0.018 | 0.04 | 0.1 | 0.2 | 0.03 | 1 | 1.5 | 3 | balance | 15.717 | 83 | 49 | 24 | 10 | 2.04 |
| 8 | powder | 0.024 | 52.24 | 19.01 | 2.96 | 0.92 | 0.38 | 5.09 | 0.011 | 0.06 | 0.3 | 0.25 | 0.01 | | | | balance | 18.745 | 105 | 25 | 55 | 25 | 0.45 |
| | shaped article | 0.021 | 52.48 | 18.93 | 3.0 | 0.94 | 0.38 | 5.11 | 0.017 | 0.055 | 0.3 | 0.25 | 0.01 | | | | balance | 18.507 | 110 | 30 | 55 | 25 | 0.55 |
| 9 | powder | 0.09 | 52.24 | 19.01 | 2.96 | 0.92 | 0.38 | 5.09 | 0.011 | 0.06 | 0.3 | 0.25 | 0.01 | | | | balance | 18.679 | 110 | 30 | 53 | 25 | 0.60 |
| | shaped article | 0.085 | 52.48 | 18.93 | 3.0 | 0.94 | 0.38 | 5.11 | 0.017 | 0.055 | 0.3 | 0.25 | 0.01 | | | | balance | 18.443 | 113 | 30 | 55 | 28 | 0.55 |
| 10 | powder | 0.04 | 53.5 | 20.5 | 2.5 | 0.5 | 1.0 | 4.5 | 0.03 | 0.06 | 0.25 | 0.3 | 0.02 | | | | balance | 16.8 | 115 | 32 | 53 | 30 | 0.60 |
| | shaped article | 0.041 | 53.5 | 19.9 | 2.6 | 0.5 | 1.0 | 4.5 | 0.035 | 0.065 | 0.25 | 0.3 | 0.02 | | | | balance | 17.289 | 121 | 35 | 50 | 36 | 0.70 |
| 11 | powder | 0.024 | 52.24 | 19.01 | 2.96 | 1.65 | 1.8 | 4.5 | 0.03 | 0.06 | 0.25 | 0.3 | 0.02 | | | | balance | 17.156 | 150 | 45 | 55 | 50 | 0.82 |
| | shaped article | 0.021 | 52.48 | 18.93 | 3.0 | 1.65 | 1.8 | 4.5 | 0.035 | 0.065 | 0.25 | 0.3 | 0.02 | | | | balance | 16.949 | 153 | 48 | 55 | 50 | 0.87 |
| 12 | powder | 0.024 | 52.24 | 19.01 | 2.96 | 1.65 | 1.2 | 4.5 | 0.03 | 0.06 | 0.25 | 0.3 | 0.02 | | | | balance | 17.756 | 145 | 40 | 55 | 50 | 0.73 |
| | shaped article | 0.021 | 52.48 | 18.93 | 3.0 | 1.65 | 1.2 | 4.5 | 0.035 | 0.065 | 0.25 | 0.3 | 0.02 | | | | balance | 17.549 | 149 | 44 | 50 | 55 | 0.88 |
| 13 | powder | 0.024 | 52.24 | 19.01 | 2.96 | 0.92 | 0.38 | 5.09 | 0.011 | 0.06 | 0.3 | 0.25 | 0.01 | 1 | | | balance | 17.745 | 114 | 30 | 60 | 24 | 0.50 |
| | shaped article | 0.021 | 52.48 | 18.93 | 3.0 | 0.94 | 0.38 | 5.11 | 0.017 | 0.055 | 0.3 | 0.25 | 0.01 | 1 | | | balance | 17.507 | 119 | 35 | 60 | 24 | 0.58 |
| 14 | powder | 0.09 | 52.24 | 19.01 | 2.96 | 0.92 | 0.38 | 5.09 | 0.011 | 0.06 | 0.3 | 0.25 | 0.01 | | 1.5 | | balance | 17.179 | 122 | 36 | 50 | 36 | 0.72 |
| | shaped article | 0.085 | 52.48 | 18.93 | 3.0 | 0.94 | 0.38 | 5.11 | 0.017 | 0.055 | 0.3 | 0.25 | 0.01 | | 1.5 | | balance | 16.9 | 125 | 36 | 53 | 36 | 0.68 |
| 15 | powder | 0.04 | 53.5 | 20.5 | 2.5 | 0.5 | 1.0 | 4.5 | 0.03 | 0.06 | 0.25 | 0.3 | 0.02 | | | 3 | balance | 13.8 | 123 | 34 | 52 | 37 | 0.65 |
| | shaped article | 0.041 | 53.5 | 19.9 | 2.6 | 0.5 | 1.0 | 4.5 | 0.035 | 0.065 | 0.25 | 0.3 | 0.02 | | | 3 | balance | 14.289 | 125 | 39 | 50 | 36 | 0.78 |
| 16 | powder | 0.024 | 52.24 | 19.01 | 2.96 | 1.65 | 1.8 | 4.5 | 0.03 | 0.06 | 0.25 | 0.3 | 0.02 | 1 | 1.5 | 3 | balance | 11.656 | 134 | 39 | 59 | 36 | 0.66 |
| | shaped article | 0.021 | 52.48 | 18.93 | 3.0 | 1.65 | 1.8 | 4.5 | 0.035 | 0.065 | 0.25 | 0.3 | 0.02 | 1 | 1.5 | 3 | balance | 11.449 | 138 | 41 | 61 | 36 | 0.67 |

In Table 5, the component composition is substantially the same between the powder material and the shaped article in each sample. This is the same as the results confirmed in the aforementioned test [1].

In Table 5, the total number of particles of inclusions in each of Samples 1 to 7 is suppressed to be 100 particles or less per 10,000 particles in the powder material and to be 100 particles or less per 1 $mm^2$ in the shaped article, while the total number of particles of inclusions in each of Samples 8 to 16 exceeds the upper limit in each of the powder material and the shaped article. In addition, the content of Al oxide is substantially not changed among Samples 1 to 16, while the content of Ti oxide and the content of Ti carbonitride in each of Samples 1 to 7 are smaller than those in each of Samples 8 to 16. Particularly the content of Ti carbonitride is conspicuously small.

Here, when paying attention to the component composition of the alloy, the content of N is suppressed to be 0.05% or less in each of Samples 1 to 7 while the content of N exceeds 0.05% in each of Samples 8 to 16. From this fact, it can be read that in the case where the content of N is suppressed to be small as in Samples 1 to 7, the content of inclusions including carbonitrides can be suppressed to be small, and hence the total number of particles of inclusions including also oxides can be suppressed to be small. Further, among Samples 8 to 16, in Samples 11, 12 and 16 where the content of Ti is large to exceed 1.5%, particularly the number of particles of carbonitrides and the total number of particles of inclusions increases. Thus, it can be said that suppressing the content of Ti in addition to N is also effective to reduce inclusions.

Description has been made about the embodiment and examples of the present invention. The present invention is not limited particularly to the embodiment and examples, but can be modified variously.

INDUSTRIAL APPLICABILITY

According to the present invention, it is possible to provide a powder material which can suppress a content of inclusions to be small in an additive manufacturing article to be obtained in the case where additive manufacturing is performed using the powder material including an Ni-based alloy, an additive manufacturing article manufactured thus with a small content of inclusions, and a method for manufacturing the powder material.

The present application is based on a Japanese patent application (Japanese Patent Application No. 2019-170114) filed on September 19, 2019, the contents of which are incorporated herein by reference.

**Claims**

1. A powder material comprising:

an atomized powder of an Ni-based alloy containing inclusions,
wherein a number of particles of the contained inclusions is 100 particles or less per 10,000 particles of the atomized powder.

2. The powder material according to Claim 1, wherein the Ni-based alloy comprises at least one additive element selected from Al, Ti and Nb, and the inclusions comprise at least one of oxide and carbonitride of the additive element.

3. The powder material according to Claim 2, wherein the number of particles in the inclusions containing the carbonitride of the additive element is smaller than the number of particles in the inclusions containing the oxide of the additive element.

4. The powder material according to Claim 2 or 3, wherein the number of particles in the inclusions containing the carbonitride of the additive element is 10 particles or less per 10,000 particles of the atomized powder.

5. The powder material according to any one of Claims 1 to 4, wherein the inclusions have a particle size of 30 $\mu$m or less.

6. The powder material according to any one of Claims 1 to 5, wherein the particles of the atomized powder have a circularity of 0.90 or more in average particle size.

7. The powder material according to any one of Claims 1 to 6, wherein the Ni-based alloy comprises, by mass%:

$$50\% \leq Ni \leq 60\%,$$

$$15\% \leq Cr \leq 25\%,$$

$$0\% < Mo \leq 5\%,$$

$$0.1\% \leq Ti \leq 1.5\%,$$

$$0.1\% \leq Al \leq 1.5\%,$$

$$0\% < Nb \leq 6\%,$$

and

$$0.005\% \leq N \leq 0.05\%,$$

with the balance being Fe and unavoidable impurities, and further comprises:

$$C \leq 0.08\%,$$

$$O \leq 0.02\%,$$

and

$$S \leq 0.03\%.$$

8. The powder material according to Claim 7, wherein the Ni-based alloy further comprises at least one kind selected from, by mass%:

$$0\% < Si \leq 0.5\%,$$

$$0\% < Mn \leq 5\%,$$

$$0.5\% \leq Hf \leq 3\%,$$

$$0.5\% \leq Zr \leq 3\%,$$

$$0\% < Co \leq 2\%,$$

and

$$0\% < Ta \leq 6\%.$$

9. An additive manufacturing article comprising an Ni-based alloy containing inclusions, wherein a number of particles of the inclusions contained in a section of the additive manufacturing article is 100 particles/mm$^2$ or less.

10. The additive manufacturing article according to Claim 9, wherein the Ni-based alloy comprises at least one additive element selected from Al, Ti and Nb, and the inclusions comprise at least one of oxide and carbonitride of the additive element.

11. The additive manufacturing article according to Claim 10, wherein the number of particles in the inclusions containing the carbonitride of the additive element is smaller than the number of particles in the inclusions containing the oxide of the additive element.

12. The additive manufacturing article according to Claim 10 or 11, wherein the number of particles in the inclusions containing the carbonitride of the additive element is 10 particles/mm$^2$ or less.

13. The additive manufacturing article according to any one of Claims 9 to 12, wherein the inclusions have a particle size of 30 $\mu$m or less in the section of the additive manufacturing article.

14. The additive manufacturing article according to any one of Claims 9 to 13, wherein the Ni-based alloy comprises, by mass%:

$$50\% \leq Ni \leq 60\%,$$

$$15\% \leq Cr \leq 25\%,$$

$$0\% < Mo \leq 5\%,$$

$$0.1\% \leq Ti \leq 1.5\%,$$

$$0.1\% \leq \text{Al} \leq 1.5\%,$$

$$0\% < \text{Nb} \leq 6\%,$$

and

$$0.005\% \leq \text{N} \leq 0.05\%,$$

with the balance being Fe and unavoidable impurities, and further comprises:

$$\text{C} \leq 0.08\%,$$

$$\text{O} \leq 0.02\%,$$

and

$$\text{S} \leq 0.03\%.$$

15. The additive manufacturing article according to Claim 14, wherein the Ni-based alloy further comprises at least one kind selected from, by mass%:

$$0\% < \text{Si} \leq 0.5\%,$$

$$0\% < \text{Mn} \leq 5\%,$$

$$0.5\% \leq \text{Hf} \leq 3\%,$$

$$0.5\% \leq \text{Zr} \leq 3\%,$$

$$0\% < \text{Co} \leq 2\%,$$

and

$$0\% < \text{Ta} \leq 6\%.$$

16. A method for producing a powder material, wherein the powder material according to any one of Claims 1 to 8 is produced by a gas atomization method using inert gas.

17. The method for producing a powder material according to Claim 16, wherein the inert gas is a noble gas.

## FIG. 1

(a) POWDER MATERIAL A

D50 CIRCULARITY: 0.90

100 μm

(b) POWDER MATERIAL B

D50 CIRCULARITY: 0.89

100 μm

FIG. 2

*FIG.3*

(a)

HV: 284

(b)

HV: 304

## FIG.4

| SAMPLE STATE | SEM IMAGE | | NUMBER OF PARTICLES OF INCLUSIONS | MAXIMUM SIZE AND KIND OF INCLUSIONS |
|---|---|---|---|---|
| | (Nb, Ti)(C, N) | (Al, Ti)O$_2$ | | |
| POWDER MATERIAL A | | 5 μm | 15 | 4.5 μm, (Al, Ti)O$_2$ |
| SHAPED ARTICLE A | | 5 μm | 19 | 5.5 μm, (Al, Ti)O$_2$ |
| POWDER MATERIAL B | 5 μm | 5 μm | 55 | 1.0 μm, (Al, Ti)O$_2$<br>5.0 μm, (Nb, Ti)(C, N) |
| SHAPED ARTICLE B | 5 μm | 5 μm | 60 | 2.5 μm, (Al, Ti)O$_2$<br>4.2 μm, (Nb, Ti)(C, N) |

EP 4 015 105 A1

## FIG. 5

EP 4 015 105 A1

*FIG. 6*

(a) Shaped Article A    (b) Shaped Article B

FIG. 7

EP 4 015 105 A1

EP 4 015 105 A1

*FIG. 8*

| SAMPLE STATE | MAXIMUM SIZE OF PARTICLES OF INCLUSIONS | | |
| --- | --- | --- | --- |
| | A | B | |
| POWDER | 22.0 µm, (Al, Ti)O$_2$ | 7.5 µm, (Al, Ti)O$_2$ | 17.5 µm, (Nb, Ti)(C, N) |
| SHAPED ARTICLE | 22.5 µm, (Al, Ti)O$_2$ | 8.0 µm, (Al, Ti)O$_2$ | 14.0 µm, (Nb, Ti)(C, N) |

## INTERNATIONAL SEARCH REPORT

| International application No. |
| --- |
| PCT/JP2020/031017 |

**A. CLASSIFICATION OF SUBJECT MATTER**
B22F 1/00(2006.01)i; B22F 3/105(2006.01)i; B22F 3/16(2006.01)i; B22F 9/08(2006.01)i; C22C 19/05(2006.01)i; B33Y 80/00(2015.01)i
FI: B22F1/00 M; B22F3/105; B22F3/16; B22F9/08 A; B33Y80/00; C22C19/05 C

According to International Patent Classification (IPC) or to both national classification and IPC

**B. FIELDS SEARCHED**

Minimum documentation searched (classification system followed by classification symbols)
B22F1/00; B22F3/105; B22F3/16; B22F9/08; C22C19/05; B33Y80/00

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2019/049594 A1 (HITACHI METALS, LTD.) 14 March 2019 (2019-03-14) paragraphs [0007], [0024]–[0025], [0030]–[0043] | 1–17 |
| X | WO 2017/175563 A1 (MITSUBISHI HEAVY INDUSTRIES AERO ENGINES, LTD.) 12 October 2017 (2017-10-12) paragraphs [0010], [0020], [0038]–[0040] | 1–8, 16–17 |
| Y | | 9–15 |
| Y | JP 2016-505415 A (SNECMA) 25 February 2016 (2016-02-25) paragraphs [0044]–[0106] | 1–17 |
| X | CN 106735273 A (SHANGHAI RES INST OF MAT) 31 May 2017 (2017-05-31) paragraphs [0034]–[0049] | 1–17 |

☒ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 October 2020 (05.10.2020) | 02 November 2020 (02.11.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

International application No.

PCT/JP2020/031017

**INTERNATIONAL SEARCH REPORT**

C (Continuation).   DOCUMENTS CONSIDERED TO BE RELEVANT

| Category* | Citation of document, with indication, where appropriate, of the relevant passages | Relevant to claim No. |
|---|---|---|
| X | CN 109986086 A (BGRIMM TECH GROUP CO., LTD.) 09 July 2019 (2019-07-09) paragraphs [0032]-[0038], fig. 1, 3 | 1-17 |
| X | CN 108941589 A (BGRIMM TECH GROUP CO., LTD.) 07 December 2018 (2018-12-07) paragraphs [0026]-[0044], fig. 1-3 | 1-17 |

Form PCT/ISA/210 (continuation of second sheet) (January 2015)

**INTERNATIONAL SEARCH REPORT**
Information on patent family members

| | | International application No. |
| --- | --- | --- |
| | | PCT/JP2020/031017 |

| Patent Documents referred in the Report | Publication Date | Patent Family | Publication Date |
| --- | --- | --- | --- |
| WO 2019/049594 A1 | 14 Mar. 2019 | JP 2019-49015 A<br>TW 201920705 A | |
| WO 2017/175563 A1 | 12 Oct. 2017 | US 2018/0298470 A1<br>paragraphs [0010],<br>[0020], [0038]-[0040]<br>EP 3444366 A1<br>CA 3006713 A1<br>JP 2017-186610 A | |
| JP 2016-505415 A | 25 Feb. 2016 | US 2015/0321255 A1<br>paragraphs [0055]-<br>[0116]<br>WO 2014/083277 A1<br>EP 2925470 A1<br>FR 2998496 A1<br>CA 2892840 A1<br>CN 104903029 A<br>RU 2015125546 A<br>BR 112015012127 A<br>SG 11201504104U A<br>SG 10201703874W A<br>JP 2019-89334 A | |
| CN 106735273 A | 31 May 2017 | (Family: none) | |
| CN 109986086 A | 09 Jul. 2019 | (Family: none) | |
| CN 108941589 A | 07 Dec. 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017036485 A
- JP 2019170114 A